# EUROPEAN PATENT SPECIFICATION

(11) **EP 2 773 000 B1**
(45) Date of publication and mention of the grant of the patent: **17.06.2020**
(21) Application number: 14157044.0
(22) Date of filing: 27.02.2014
(51) Int. Cl.: H02H 3/04, H02H 9/04

(54) **Surge protection and signaling device**
Überspannungsschutz und Signalvorrichtung
Protection de surtension et dispositif de signalisation

(30) Priority: 28.02.2013 IT TO20130164
(43) Date of publication of application: 03.09.2014
(73) Proprietor: Finder S.P.A., 10040 Almese (TO) (IT)
(72) Inventor: Colombo, Andrea, 10015 Ivrea (TO) (IT)
(74) Representative: Robba, Pierpaolo

(56) References cited:
- EP-A1- 0 862 255
- EP-A2- 1 022 837
- US-A1- 2010 023 286
- US-A1- 2011 267 730

## Description

### Technical field

The present invention generally relates to a surge protection and signaling device to be used for protecting an electrical system and the devices connected thereto from surges.

More particularly, the present invention relates to a surge protection device having an input and an output and arranged to signal the end-of-life condition of the device thanks to an embedded power supply, which, by energizing an electro-mechanical relay, is capable of managing also low current values typical of the inputs of processors or controllers (PLC), which allow automatically managing the assistance, or possibly disconnecting the device no longer protected from the mains (power line).

### Prior Art

It is known that surge protection devices (SPD) include surge limiter components, such as varistors, which undergo a progressive degradation due to ageing or to an excessive surge.

EP0716493 discloses a protection system which includes varistors sensitive to incoming voltage for preventing voltage overloads and is associated to a spring adapted to disconnect them at the life end and heats up.

DE102004024657 (A1) discloses a device for deviating overvoltages, comprising varistors, diodes or the like, arranged in a structural unit and comprising at least one switching device for the electrical separation of said elements in the event of thermal overload of said overvoltage limiting elements.

The degradation process can lead, in time, to the failure of the device to intervene, with a consequent lack of protection of the system and the devices connected thereto.

For instance, in the varistors used in the so called "limitation SPDs", in which the voltage at the terminals is kept constant while the surge is being adsorbed, a small leakage current always circulates when the varistors are subjected to a voltage.

When the SPD, and in particular the varistor, is at end of life, its characteristic leakage current has a high value, whereas its resistance in "non conducting state" decreases.

Under such conditions, the SPD is no longer capable of protecting the electrical system from a surge and is therefore to be replaced.

A common need for all surge protection devices (SPD) is that, in case of device degradation, its "out of order" condition is to be signaled, in order the device can be replaced.

A known solution to this problem is to provide a thermal contact breaker in series with the varistor, intended to disconnect the SPD from the power line when the SPD is at end of life.

Actually, when the leakage current of the varistor has too high a value due to the component ageing or due to an excessive surge, a heating of the varistor takes place such as to make the thermal contact breaker intervene.

In accordance with such a known solution, the intervention of the thermal protection is locally signaled by a mechanically operating window, whose color changes.

According to another known solution, the intervention of the thermal protection is signaled by a light or sound signal included in the SPD. Some models include a mechanical microswitch, which is not suitable for managing low current loads typical of the inputs of a PLC, and they are used to control light signals such as lamps. Signaling to a processor or a controller typically is not implemented owing to the complexity required of external circuitry, which typically includes a supporting relay and a dedicated power supply, which is to be always connected to the power line and is therefore exposed to the surges, with risk of faults.

The known solution allows eliminating the problem of signaling the "out of -order state" of the SPD to a user, but it does not solve the problem of using such a signaling in processors or controllers (PLC) that enable cutting off a whole electronic device in order to make it safe, besides automatically managing the intervention.

Generally speaking, the Applicant has realized that the prior art has no solution capable of effectively solving the problem of managing the automatic signaling for the intervention for replacing and/or disconnecting the device no longer protected from the power line, by using components integrated into the surge protection device.

### Description of the invention

It is an object of the present invention to solve the problems mentioned above of the prior art.

The object is achieved by the surge protection device as claimed.

The claims are integral part of the technical teaching provided herein in respect of the invention.

In accordance with a feature of a preferred embodiment, the surge protection device comprises:
- a surge limiter component, connectable to an electrical system;
- a contact breaker, in turn comprising a changeover contact, said contact breaker being connected to the surge limiter component and being arranged to disconnect the surge limiter component from a power line.

The device further comprises a power supply connected to the changeover contact and signaling means connected to the power supply, said changeover contact being activated by the contact breaker when the contact breaker disconnects the surge limiter component from the power line.

In accordance with an embodiment, the signaling means consist of a signaling relay.

In accordance with a second embodiment, the signaling means consist of an optoinsulator.

In accordance with another feature of the present invention, the device comprises an additional surge limiter component connected in series with the surge limiter component.

In accordance with a further feature of the present invention, the power supply is a capacitive drop power supply and is connected to the signaling means by means of a bridge rectifier.

### Brief Description of the Figures

The above and other features and advantages of the present invention will become apparent from the following description of preferred embodiments, made by way of non limiting example with reference to the accompanying drawings, in which elements denoted by a same or a similar numerical reference denote components having similar functions and construction and in which:

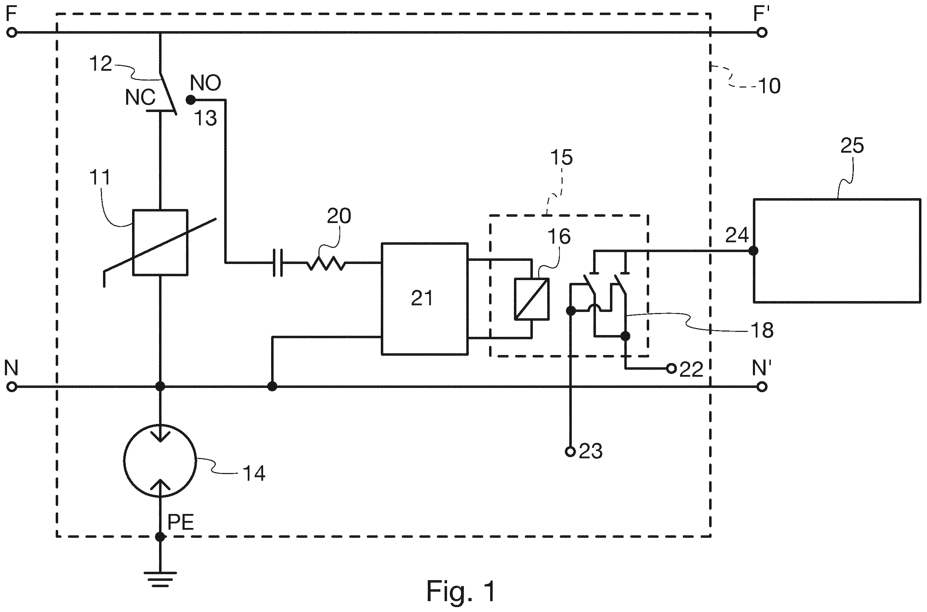

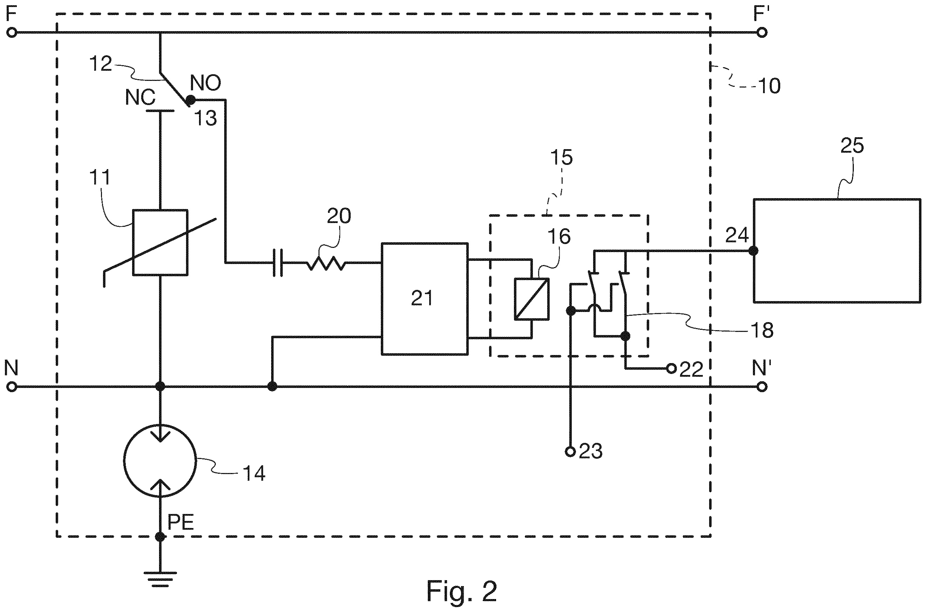

- Figs. 1 and 2 schematically show a device according to the invention in two operating situations.

### Preferred Embodiments

Referring to Figs. 1 and 2, a surge protection device or SPD 10 in accordance with the preferred embodiment of the invention is connected in known manner to an electrical system and includes a surge limiter component 11.

More particularly, surge protection device 10 is an SPD with an input (input terminals F, N, PE) and an output (F', N').

Preferably, surge limiter component 11 is a varistor.

Surge limiter component 11 is connected in series with a contact breaker 12, for instance a thermal contact breaker, arranged to disconnect the surge limiter component from a power line when device 10, and in particular component 11, is at end of life.

Contact breaker 12, besides being arranged to disconnect the surge limiter component from a power line according to standard EN61643-11, is also arranged to connect immediately thereafter, for instance within a range of some ten milliseconds, a power supply 20 to the power line. The power supply is for instance a capacitive drop power supply and is in turn connected to signaling means 15, which can be for instance a signaling relay 15.

Contact breaker 12, for instance a thermal contact breaker of known type, is an electromechanical device including means for monitoring the surface temperature of a component to which it is connected, and it intervenes when a predetermined temperature threshold is exceeded, by disconnecting the component and connecting another component.

In the exemplary embodiment, contact breaker 12 includes means for monitoring the surface temperature of surge limiter component 11 and it intervenes when a temperature threshold, predetermined for instance depending on the melting temperature of a solder, is exceeded, as it will be explained in more detail below, by disconnecting surge limiter component 11 from the power line and by subsequently connecting power supply 20 to the power line.

More particularly, a known contact breaker includes a movable changeover contact having two useful operating positions, which, in changeover contact 13 of the exemplary embodiment, are denoted NC and NO in Figs. 1 and 2.

In the embodiment of the invention, changeover contact 13 connects surge limiter component 11 to the power line when in its first position NC, and changeover contact 13 connects power supply 20 to the power line when in its second position NO, after having disconnected surge limiter component 11.

Preferably, changeover contact 13 of a contact breaker of known type is kept in its first position NC by fastening means, for instance a welding. When a predetermined temperature is attained, changeover contact 13 is released from the fastening means, for instance by melting the welding, and is brought to its second position NO.

A known contact breaker includes activating means configured to activate changeover contact 13 in case of fault of surge limiter component 11. More particularly, the contact breaker includes a copper cord of suitable cross section and shape, which is kept in an "original" position by welding. A preloaded spring allows the movable changeover contact, mounted on the cord end, to disconnect the surge limiter component when the surface temperature thereof attains a predetermined level such as to melt the welding. The surge limiter component and the welding point are kept at the same temperature by suitable thermal conveyors connecting them.

Preferably, contact breaker 12 acts as the changeover contact.

Preferably, power supply 20 is a low voltage power supply and it is arranged to supply the signaling means or relay 15 with a voltage lower than 50 V.

For instance, power supply 20 can supply signaling means 15 with a 12 V voltage.

In the embodiment in which signaling means 15 are an electromechanical relay, power supply 20 is arranged to supply a coil 16 of relay 15. Relay 15, of known type, further includes a contact 18, which for instance is closed when the coil is energized. Preferably, relay 15 includes a plurality of contacts 18 connected in parallel.

In a further embodiment, signaling means 15 are an optoinsulator.

Preferably, power supply 20 is connected with a bridge rectifier 21, in turn connected to coil 16 of relay 15 or to the optoinsulator.

The optoinsulator or relay 15, and more particularly contact 18 thereof, is connected to a processor or a programmable controller (PLC) 25, allowing managing the signal coming from the relay.

As an alternative, signaling means 15 can be associated, or in particular connected, with an external power relay, arranged to disconnect the load no longer protected from the power line.

Preferably, thermal contact breaker 12 is connected to surge limiter component 11 and is arranged to disconnect it from a power line and to connect to the power line, once varistor 11 has been disconnected, a power supply stage including a capacitive drop power supply 20 connected with a bridge rectifier 21 for a local LED light signaling through remote signaling relay 15.

Preferably, remote signaling relay 15 is a relay of known type having a common contact 22, a normally closed contact 23 and a normally open contact 24, and it has golden contacts, connected in parallel, in order to ensure the management of very low loads such as the currents typical of a PLC input, and to prevent compelling to use a specific proprietary communication protocol. Preferably, contacts 18 of relay 15 are changeover contacts.

In an alternative embodiment, relay 15 can be replaced by an optoinsulator connected to bridge rectifier 21 and to the processor or to programmable controller (PLC) 25.

In accordance with a variant embodiment, device 10 includes an additional surge limiter component 14, for instance a gas-filled spark gap (GDT) arranged to ensure the galvanic insulation towards earth, connected in series with surge limiter component 11.

In accordance with a further variant embodiment, surge limiter component 11, single or arranged in a Y configuration with a GDT, can be connected in parallel, upon a suitably decoupling by inductors or resistors, with another varistor connected to a thermal contact breaker. In another variant, the varistor, connected to the thermal contact breaker, can be preceded by a gas-filled spark gap (GDT) connected in parallel and suitably decoupled in known manner.

The operation of surge protection device 10 described above is as follows.

If surge protection device 10 is under normal effectiveness conditions, surge limiter component 11 is kept connected to the power line and contact breaker 12 does not intervene.

When surge protection device 10 is at end of life, due to the ageing of surge limiter component 11 or because of an excessive surge, contact breaker 12 intervenes and changeover contact 13 disconnects surge limiter component 11 from the power line and connects capacitive drop power supply 20 and coil 16 of relay 15 or the optoinsulator to the power line.

Preferably, changeover contact 13 connects capacitive drop power supply 20, bridge rectifier 21 and relay 15 or the optoinsulator to the power line.

In such end-of-life situation, surge protection device 10 remains connected to the power line and to the power supply and supplies the load, but it ceases its protection function.

In the invention, in accordance with the preferred embodiment, surge limiter component is a varistor. When varistor 11 is at end of life, its leakage current has a high value, causing a heating of the varistor such that contact breaker 12 intervenes and disconnects varistor 11 from the power line.

More particularly, contact breaker 12 intervenes and disconnects varistor 11 from the power line if the characteristic leakage current of the varistor has a value higher than few mA.

Preferably, contact breaker 12 intervenes and disconnects varistor 11 from the power line if the characteristic leakage current of the varistor has a value higher than 2 mA

Preferably, contact breaker 12 intervenes and disconnects varistor 11 from the power line upon the attainment of a predetermined value of the surface temperature.

Besides intervening to disconnect the varistor from the power line, the contact breaker, by positioning itself on its contact NO, supplies capacitive drop power supply 20 with voltage, and the power supply supplies coil 16 of relay 15 by rectifying and stabilizing at very low voltage. Moreover, the power supply is connected so as to supply a LED diode for the local fault signaling. More particularly, in the preferred embodiment of the invention, changeover contact 13 connects to the power line a power supply stage including capacitive drop power supply 20 and bridge rectifier 21, which in turn supplies with a very low voltage coil 16 making contact 18 close. In this manner, relay 15 can be used for disconnecting the load no longer protected from the power line, or it can be used for sending a signaling to the processor or to programmable controller (PLC) 25.

Advantageously, relay 15 in surge protection device 10, if it is associated with an external relay, can disconnect the load no longer protected from the power line, or it is arranged to signal the fault of device 10. The signal is sent to a processor or a programmable controller (PLC) 25, which uses the signal for managing in automatic manner the assistance of surge protection device 10 having reached the end of life, for instance by starting an intervention for replacement or repair of the same device.

Advantageously, power supply 20 in surge protection device 10 of the invention, by stabilizing at very low voltages, allows using micro-relays.

The invention in accordance with the preferred embodiment allows solving the problem of using the signal of the out-of-order state of the surge protection device (SPD) in processors or controllers (PLC) allowing an automatic management of the intervention.

## Claims

1. Surge protection device (10) for surge protection against overvoltage comprising:
- a surge limiter component (11), connectable to an electrical system;
- a thermal contact breaker (12), comprising a changeover contact (13) arranged, in a first position (NC), to connect the surge limiter component (11) to a power line, said contact breaker (12) further comprising thermally activating means configured to activate the changeover contact (13) in case of fault of the surge limiter component (11);
wherein said surge protection device (10) further comprises a low voltage power supply (20) connected to said changeover contact (13), and signaling means (15) connected to said low voltage power supply (20), wherein said signaling means (15) are a signaling relay or an optoisolator and wherein the thermal activating means comprises fastening means and wherein said changeover contact (13) is a movable changeover contact kept in the first position (NC) by the fastening means, said fastening means being connected to the surge limiter component (11) in order to have the same temperature, and said movable changeover contact, when the temperature of the surge limiter component (11) and the fastening means connected thereto exceeds a predetermined temperature threshold, is released from the fastening means and is brought to a second position (NO), **characterized in that** said movable changeover contact is brought to said second position (NO) to connect the low voltage power supply (20) and the signaling means (15) to the power line.

2. Surge protection device (10) according to claim 1, **characterized in that** said signaling relay (15) comprises a coil (16) connected to said changeover contact (13).

3. Surge protection device (10) according to claim 2, **characterized in that** said signaling relay (15) comprises a contact (18) controlled by said coil (16).

4. Surge protection device (10) according to any of the preceding claims, **characterized in that** said surge protection device (10) comprises a bridge rectifier (21) connected to said low voltage power supply (20).

5. Surge protection device (10) according to any of the preceding claims, **characterized in that** said surge protection device (10) comprises an additional surge limiter component (14) connected to said surge limiter component (11).

6. Surge protection device (10) according to any of the preceding claims, **characterized in that** said surge limiter component (11) is a varistor.

7. Surge protection device (10) according to claim 5 or 6, **characterized in that** said additional surge limiter component (14) is a gas-filled spark gap.

8. Surge protection device (10) according to any of the preceding claims, **characterized in that** said low voltage power supply is a capacitive drop power supply (20).

9. Surge protection device (10) according to any of the preceding claims, **characterized in that** said signaling means (15) are connected to a computer or to a controller (25).

10. Surge protection device (10) according to any of the claims 1 to 8, **characterized in that** said signaling means (15) are associated with an external power relay, in order to disconnect the load from the power line.

11. Surge protection device (10) according to any of the preceding claims, **characterized in that** the low voltage power supply (20) is connected to a LED diode for fault signaling.

## Patentansprüche

1. Überspannungsschutzvorrichtung (10) zum Überspannungsschutz vor Spannungsspitzen, mit:
- einem Überspannungsbegrenzer (11) der an ein elektrisches System anschließbar ist,
- einem thermischen Unterbrecher (12), der einen Wechselkontakt (13) enthält, der in einer ersten Stellung (NC) ausgelegt ist, den Überspannungsbegrenzer (11) an eine Stromleitung anzuschließen, wobei der Unterbrecher (12) zudem thermisch aktivierte Mittel enthält, die dafür ausgelegt sind, den Wechselkontakt (13) im Falle eines Fehlers der Überspannungsbegrenzers (11) zu aktivieren,
wobei die Überspannungsschutzvorrichtung (10) zudem eine Niederspannungsquelle (20) enthält, die an den Wechselkontakt (13) angeschlossen ist, und Signalisierungsmittel (15) enthält, die an die Niederspannungsquelle (20) angeschlossen sind, wobei die Signalisierungsmittel (15) ein Melderelais oder ein Optoisolator sind und wobei die thermisch aktivierbaren Mittel Befestigungsmittel enthalten und wobei der Wechselkontakt (13) ein beweglicher Wechselkontakt ist, der von den Befestigungsmitteln in der ersten Position (NC) gehalten wird, wobei die Befestigungsmittel an den Überspannungsbegrenzer (11) angeschlossen sind, um dieselbe Temperatur zu haben, und wobei der bewegliche Wechselkontakt, sobald die Temperatur des Überspannungsbegrenzers (11) und der damit verbundenen Befestigungsmitteln eine vorgegebene Temperaturschwelle überschreiten, sich von den Befestigungsmitteln löst und in eine zweite Position (NO) gebracht wird, **dadurch gekennzeichnet, dass** der bewegliche Wechselkontakt in die zweite Position (NO) gebracht wird, um die Niederspannungsquelle (20) und die Signalisierungsmittel (15) an die Stromleitung anzuschließen.

2. Überspannungsschutzvorrichtung (10) nach Anspruch 1, **dadurch gekennzeichnet, dass** das Melderelais (15) eine Spule (16) enthält, die an den Wechselkontakt (13) angeschlossen ist.

3. Überspannungsschutzvorrichtung (10) nach Anspruch 2, **dadurch gekennzeichnet, dass** das Melderelais (15) einen Kontakt (18) enthält, der von der Spule (16) gesteuert wird.

4. Überspannungsschutzvorrichtung (10) nach einem der vorstehenden Ansprüche, **dadurch gekennzeichnet, dass** die Überspannungsschutzvorrichtung (10) einen Brückengleichrechter (21) enthält, der an die Niederspannungsquelle (20) angeschlossen ist.

5. Überspannungsschutzvorrichtung (10) nach einem der vorstehenden Ansprüche, **dadurch gekennzeichnet, dass** die Überspannungsschutzvorrichtung (10) einen zusätzliche Überspannungsbegrenzer (14) enthält, der an den Überspannungsbegrenzer (11) angeschlossen ist.

6. Überspannungsschutzvorrichtung (10) nach einem der vorstehenden Ansprüche, **dadurch gekennzeichnet, dass** die Überspannungsbegrenzer (11) ein Varistor ist.

7. Überspannungsschutzvorrichtung (10) nach Anspruch 5 oder 6, **dadurch gekennzeichnet, dass** die zusätzliche Überspannungsbegrenzer (14) eine gasgefüllte Funkenstrecke ist.

8. Überspannungsschutzvorrichtung (10) nach einem der vorstehenden Ansprüche, **dadurch gekennzeichnet, dass** die Niederspannungsquelle eine kapazitive Notstromquelle (20) ist.

9. Überspannungsschutzvorrichtung (10) nach einem der vorstehenden Ansprüche, **dadurch gekennzeichnet, dass** die Signalisierungsmittel (15) an einen Computer oder an eine Steuerung (25) angeschlossen sind.

10. Überspannungsschutzvorrichtung (10) nach einem der Ansprüche 1 bis 8, **dadurch gekennzeichnet, dass** die Signalisierungsmittel (15) an ein externes Leistungsrelais angeschlossen sind, um die Last von der Stromleitung abzutrennen.

11. Überspannungsschutzvorrichtung (10) nach einem der vorstehenden Ansprüche, **dadurch gekennzeichnet, dass** die Niederspannungsquelle (20) an eine LED Diode zur Fehleranzeige angeschlossen ist.

## Revendications

1. Dispositif de protection de surtension (10) pour une protection de surtension contre les tensions excessives comprenant :
- un composant limiteur de surtension (11), pouvant être connecté à un système électrique ;
- un disjoncteur thermique (12), comprenant un contact à deux directions (13) destiné, dans une première position (NC), à connecter le composant limiteur de surtension (11) à une ligne électrique, ledit disjoncteur (12) comprenant en outre des moyens d'activation thermique configurés pour activer le contact à deux directions (13) en cas de défaut du composant limiteur de surtension (11) ;
dans lequel ledit dispositif de protection de surtension (10) comprend en outre un bloc d'alimentation basse tension (20) connecté audit contact à deux directions (13), et des moyens de signalisation (15) connectés audit bloc d'alimentation basse tension (20), dans lequel lesdits moyens de signalisation (15) sont un relais de signalisation ou un optoisolateur et dans lequel les moyens d'activation thermique comprennent des moyens de fixation et dans lequel ledit contact à deux directions (13) est un contact à deux directions mobile maintenu dans la première position (NC) par les moyens de fixation, lesdits moyens de fixation étant connectés au composant limiteur de surtension (11) afin d'avoir la même température, et ledit contact à deux directions mobile, lorsque la température du composant limiteur de surtension (11) et des moyens de fixation connectés à celui-ci dépasse un seuil de température prédéterminé, est dégagé des moyens de fixation et est amené à une seconde position (NO), **caractérisé en ce que** ledit contact à deux directions mobile est amené à ladite seconde position (NO) pour connecter le bloc d'alimentation basse tension (20) et les moyens de signalisation (15) à la ligne électrique.

2. Dispositif de protection de surtension (10) selon la revendication 1, **caractérisé en ce que** ledit relais de signalisation (15) comprend une bobine (16) connectée audit contact à deux directions (13).

3. Dispositif de protection de surtension (10) selon la revendication 2, **caractérisé en ce que** ledit relais de signalisation (15) comprend un contact (18) commandé par ladite bobine (16).

4. Dispositif de protection de surtension (10) selon l'une quelconque des revendications précédentes, **caractérisé en ce que** ledit dispositif de protection de surtension (10) comprend un redresseur en pont (21) connecté audit bloc d'alimentation basse tension (20).

5. Dispositif de protection de surtension (10) selon l'une quelconque des revendications précédentes, **caractérisé en ce que** ledit dispositif de protection de surtension (10) comprend un composant limiteur de surtension supplémentaire (14) connecté audit composant limiteur de surtension (11).

6. Dispositif de protection de surtension (10) selon l'une quelconque des revendications précédentes, **caractérisé en ce que** ledit composant limiteur de surtension (11) est une varistance.

7. Dispositif de protection de surtension (10) selon la revendication 5 ou 6, **caractérisé en ce que** ledit composant limiteur de surtension supplémentaire (14) est un éclateur rempli de gaz.

8. Dispositif de protection de surtension (10) selon l'une quelconque des revendications précédentes, **caractérisé en ce que** ledit bloc d'alimentation basse tension est un bloc d'alimentation à chute capacitive (20).

9. Dispositif de protection de surtension (10) selon l'une quelconque des revendications précédentes, **caractérisé en ce que** lesdits moyens de signalisation (15) sont connectés à un ordinateur ou à un dispositif de commande (25).

10. Dispositif de protection de surtension (10) selon l'une quelconque des revendications 1 à 8, **caractérisé en ce que** lesdits moyens de signalisation (15) sont associés à un relais de puissance externe, afin de déconnecter la charge de la ligne électrique.

11. Dispositif de protection de surtension (10) selon l'une quelconque des revendications précédentes, **caractérisé en ce que** le bloc d'alimentation basse tension (20) est connecté à une diode à DEL permettant une signalisation de défaut.
